## Europäisches Patentamt
## European Patent Office
## Office européen des brevets

(19)

(11) Numéro de publication : **0 136 189 B1**

(12) **FASCICULE DE BREVET EUROPÉEN**

(45) Date de publication du fascicule du brevet :
29.07.87

(51) Int. Cl.⁴ : **B 65 G   1/04**

(21) Numéro de dépôt : **84401114.8**

(22) Date de dépôt : **30.05.84**

(54) Dispositif pour la préhension de récipients, tels que des bacs de rangement.

(30) Priorité : 03.06.83 FR 8309249

(43) Date de publication de la demande :
03.04.85 Bulletin 85/14

(45) Mention de la délivrance du brevet :
29.07.87 Bulletin 87/31

(84) Etats contractants désignés :
AT BE CH DE GB IT LI LU NL SE

(56) Documents cités :
FR-A- 2 482 057
US-A- 3 478 901
US-A- 4 352 622

(73) Titulaire : **LAPOUYADE S.A.**
**124 avenue de la République**
**F-75011 Paris (FR)**

(72) Inventeur : **Bochatay, Daniel François**
**68 rue Maurice Bertheaux**
**F-91120 Palaiseau (FR)**
Inventeur : **Ragot, Jean-Claude Romain**
**9 rue des Ormes**
**F-95290 l'Isle Adam (FR)**

(74) Mandataire : **Lepeudry-Gautherat, Thérèse et al**
**ARMENGAUD JEUNE CABINET LEPEUDRY 6, rue du**
**Fg. St-Honoré**
**F-75008 Paris (FR)**

EP 0 136 189 B1

**Description**

L'invention concerne un dispositif pour la préhension de récipients, notamment de bacs de rangement, et pour leur entraînement horizontal le long d'une plateforme de manutention.

Selon une disposition classique de rangement automatisé, une plate-forme mobile se déplace entre deux rayonnages situés de part et d'autre d'une allée centrale, et permet l'extraction ou le rangement automatique de bacs placés dans les rayonnages, ainsi que le transport de ces bacs entre leur lieu de rangement et une table de travail située généralement à une extrémité de cette allée. Pour manipuler ces bacs, la plate-forme est équipée d'un dispositif qui permet de positionner les récipients sur celle-ci pour les déplacer, ou au contraire de les transférer de la plate-forme à leur lieu de rangement.

L'un des dispositifs les plus simples comporte une chaîne sans fin à animation horizontale, munie d'un doigt preneur et articulée autour de quatre pignons disposés aux quatre sommets d'un rectangle, le doigt preneur saisissant le bac par une poignée prévue à cet effet dans son déplacement parallèlement à cette poignée, et entraînant le bac dans un déplacement perpendiculaire au premier. Le bac est guidé dans son déplacement par deux rails latéraux, qui permettent son glissement au-dessus de la chaîne. Un tel dispositif ne permet pas de déplacer un bac d'un côté de la plate-forme. à l'autre. Par ailleurs, lors du déplacement de la plate-forme elle-même le long des rayonnages, le bac, qui doit être alors immobilisé dans sa direction d'entraînement sur cette plate-forme, n'est maintenu que par un seul doigt, et n'est donc pas immobilisé de façon très sûre. D'autres dispositifs, comme décrit dans le FR-A-2 482 057 permettent le déplacement du bac d'un côté à l'autre de la plate-forme, notamment par l'utilisation de deux doigts, mais l'entraînement du bac s'effectue encore par coopération d'un seul doigt à la fois. Tous ces dispositifs comportent l'emploi de deux chaînes pour obtenir un maintien satisfaisant du bac par deux doigts. Ils sont donc compliqués et coûteux.

Le problème à résoudre est donc de concevoir un dispositif pour la préhension de bacs qui, à l'aide d'une seule chaîne, permet d'une part de déplacer les bacs d'un côté à l'autre de la plate-forme sans mouvement complémentaire, et d'autre part de maintenir ces bacs par plus d'un doigt lorsqu'ils sont centrés sur la plate-forme.

Selon l'invention, ce problème est résolu par l'utilisation d'un élément flexible muni de deux doigts qui s'engagent successivement dans les deux poignées avant et arrière du bac. De la même façon, lors du rangement du bac, les deux doigts qui le maintiennent se dégagent successivement des poignées avant et arrière du bac, autorisant un rangement d'un côté ou de l'autre de la plate-forme.

L'invention concerne donc un dispositif pour la préhension de recipients et pour leur entraînement horizontal le long d'une plate-forme de manutention comportant au moins un élément flexible sans fin, actionné horizontalement par plusieurs pignons montés sur la plateforme et entraînés par un moteur, ledit élément flexible étant muni d'au moins deux doigts destinés à coopérer avec des logements prévus sur les deux côtés frontaux d'un récipient, l'un des doigts agissant par traction et l'autre par poussée sur ce récipient (connu de FR-A-2 482 057). Selon l'invention le dispositif est caractérisé en ce que les deux doigts occupent, transversalement à l'axe longitudinal de l'élément flexible, une position identique, en ce que le cheminement de l'élément flexible est défini par deux groupes de trois pignons coopérant avec lui, les pignons de chaque groupe pris deux à deux étant alignés suivant un axe qui n'est ni parallèle à la face frontale des récipients ni parallèle à leur direction d'entraînement, les axes d'alignement des pignons étant convergents vers la zone centrale de la plate-forme et en ce que l'élément flexible coopère avec les pignons intermédiaires par sa face extérieure et avec les pignons les plus proches entre eux par sa face intérieure, de telle sorte que le brin de l'élément flexible entre chaque pignon intermédiaire et son pignon voisin soit perpendiculaire à la direction de déplacement du récipient, pour que à partir d'une première position de rangement du récipient, le doigt de traction n'entraîne momentanément plus le recipient de façon à permettre l'engagement du doigt de poussée à l'intérieur de l'autre logement du récipient, l'entraînement du récipient pouvant se poursuivre alors à l'aide des deux doigts et pour qu'en un autre endroit donné du cheminement de l'élément flexible, le doigt de poussée n'entraîne momentanément plus le récipient de façon à permettre le dégagement du doigt de traction hors de son logement, le doigt de poussée entraînant alors seul le récipient jusqu'à une autre position de rangement, où il se dégage à son tour de son logement.

Selon un mode de réalisation préféré les deux doigts sont fixés à l'élément flexible au-dessus de lui, en porte-à-faux du côté de sa face extérieure et dirigés verticalement en direction opposée de la plate-forme support pour que durant le temps où le support des doigts est en contact avec les pignons intermédiaires et effectue autour d'eux une rotation d'un quart de tour les doigts se trouvent immobilisés en tournant sur eux-mêmes au-dessus desdits pignons et n'entraînent plus le récipient.

L'invention sera mieux comprise à l'aide de la description qui suit, concernant un mode de réalisation particulier, en référence aux dessins annexés, montrant en :

Figure 1, une vue en perspective du dispositif selon l'invention ;

Figure 2, un schéma en plan du dispositif au moment de la préhension d'un bac par le premier doigt ;

Figure 3, un schéma en plan du dispositif, durant la phase d'entraînement du bac ;

Figure 4, un schéma en plan du dispositif, au moment de la préhension du bac par le deuxième doigt ;

Figure 5, un schéma en plan du dispositif, le bac étant centré sur la plate-forme ;

Figure 6, un schéma en plan du dispositif, au moment du dégagement du premier doigt, hors de la poignée du bac ;

Figure 7, un schéma, en plan du dispositif, au moment du dégagement du deuxième doigt, et du rangement du bac ;

Figure 8, un schéma en plan du dispositif, muni de deux chaînes d'entraînement.

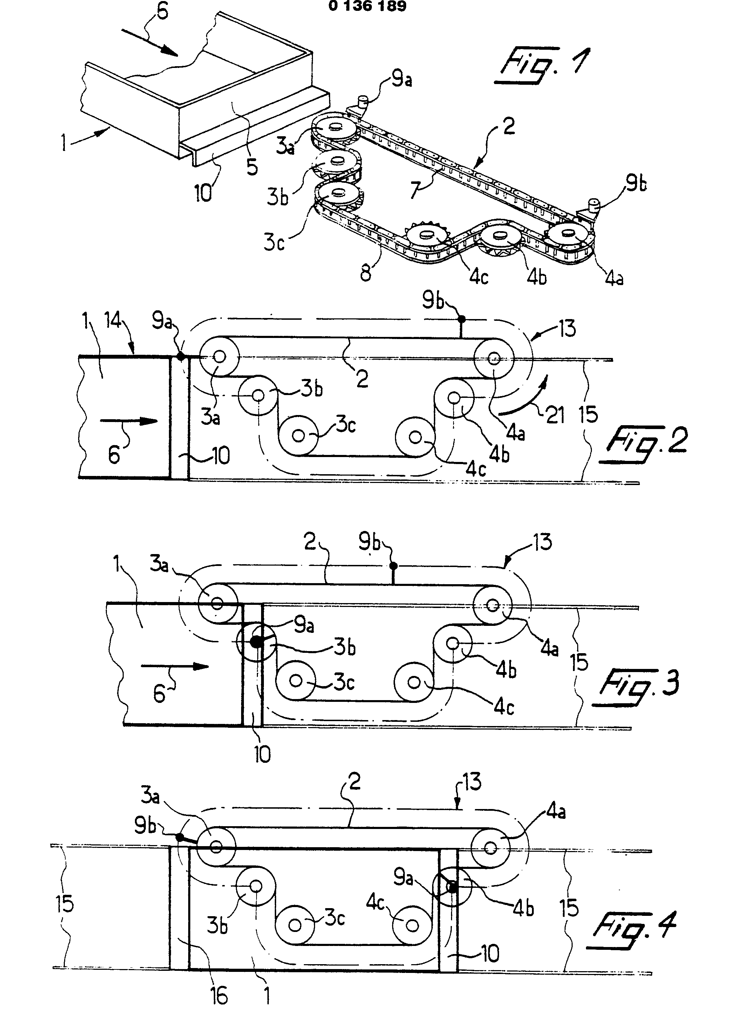

La figure 1 représente le dispositif selon l'invention prêt à entraîner un bac 1, ou le bac non représenté qui lui fait face. Le dispositif se compose d'une chaîne 2 sans fin à animation horizontale, qui coopère avec deux groupes de trois pignons (3a, 3b, 3c) et (4a, 4b, 4c), les trois pignons de chaque groupe, pris deux par deux, étant alignés suivant un axe, qui n'est ni parallèle à la face frontale 5 des bacs, ni parallèle à leur direction d'entraînement représentée par la flèche 6. Les axes d'alignement des pignons, ceux-ci étant pris deux par deux, convergent vers la zone centrale de la plate-forme non représentée supportant la chaîne et ses pignons. La chaîne 2 coopère avec les pignons les plus distants entre eux 3a et 4a par sa face de contact avec les pignons, dite face « intérieure » 7, avec les pignons intermédiaires 3b, 4b par sa face « extérieure » 8, et enfin avec les pignons les plus proches entre eux 3c, 4c, à nouveau par sa face intérieure 7. Cette chaîne comporte deux doigts 9a, 9b fixés sur elle en porte-à-faux du côté de sa face extérieure 8 et au-dessus de la chaîne 2, et dirigés verticalement, en direction opposée de la plate-forme support. Les deux doigts 9a, 9b sont distants l'un de l'autre d'une longueur sensiblement égale à la longueur d'un bac. Cet agencement, où un doigt est situé près de chaque bac 1 placé à gauche ou à droite de la plate-forme, permet la préhension d'un de ces bacs moyennant un minimum de déplacement du doigt preneur. Les six pignons sont actionnés en rotation dans le plan de la chaîne 2, par exemple par un moteur non représenté, placé au-dessous d'eux, et entraînent ainsi la chaîne 2. Chaque bac 1 est muni d'une poignée 10 dont la section est en forme de L, et qui s'étend sur toute ou partie de la longueur des faces frontales 5 du bac 1. Elle est fixée par un de ses bords longitudinaux à chacune des deux faces frontales 5, de façon à définir avec elles un logement de section en forme de U orienté vers le bas. La largeur intérieure de la poignée 10 est supérieure au diamètre extérieur de chaque doigt 9a, 9b, de façon que ceux-ci puissent s'y loger. Deux rails non représentés et dirigés selon la flèche 6 guident le bac 1 latéralement lors de son entraînement par les doigts 9a, 9b, et permettent son glissement au-dessus de la chaîne 2. Les doigts 9a, 9b, sont suffisamment saillants au-dessus de la chaîne 2, de façon qu'ils s'introduisent dans la poignée 10 lors du mouvement de la chaîne 2 et qu'ils entraînent le bac en s'appuyant sur la face frontale de la poignée 10, comme précisé sur les figures suivantes.

La figure 2 représente schématiquement le dispositif selon l'invention lors de son fonctionnement. La chaîne 2 est actionnée dans le sens de la flèche 21, de sorte que le doigt 9a effectue, depuis sa position en figure 1, une rotation autour du pignon 3a. Le doigt 9b effectue pour l'instant un déplacement linéaire dans le sens d'actionnement de la chaîne 2. La trajectoire des doigts 9a, 9b durant un parcours complet est d'ailleurs visualisée par le trait mixte 13. Le bac 1 occupe une position de rangement dans son rayonnage telle que l'axe longitudinal de la poignée 10 est tangentiel à la trajectoire 13 des doigts 9a, 9b, et que par ailleurs un des bords latéraux 14 du bac 1 est dans le prolongement de la ligne joignant les axes des deux pignons 3a, 4a. De cette façon le doigt 9a vient pénétrer dans la poignée 10 lors de sa rotation autour du pignon 3a. Sur la figure 2, le doigt 9a commence à pénétrer dans la poignée 10. Dans son mouvement, le bac 1 sera guidé latéralement par deux rails 15.

Sur la figure 3, le doigt 9a, après avoir contourné le pignon 3a par la face intérieure de la chaîne 2 contourne le pignon 3b par sa face extérieure. Durant le temps où le support du doigt 9a est en contact avec le pignon 3b et effectue autour de lui une rotation d'un quart de tour, le doigt 9a, qui est en porte-à-faux par rapport au point de fixation de son support sur la chaîne 2 et se trouve alors au-dessus du pignon 3b, tourne sur lui-même et n'entraîne donc plus le bac 1 dans le sens de la flèche 6. Le trajet du doigt 9a jusqu'au pignon 3c étant perpendiculaire au sens d'entraînement du bac 1, celui-ci ne sera pas non plus entraîné durant cette phase. Le doigt 9a contournera alors le pignon 3c, ira en direction du pignon 4c et le contournera. Durant toute cette phase, le bac 1 est entraîné.

La figure 4 représente l'instant où, après avoir quitté le pignon 4c, et s'être dirigé vers le pignon 4b, le doigt 9a effectue au-dessus de celui-ci une rotation sur lui-même. Dès la fin de la rotation du doigt 9a autour du pignon 4c, le bac 1 s'est arrêté. Cet arrêt ira permettre au doigt 9b de pénétrer dans la poignée arrière 16 du bac 1, d'une façon identique à la pénétration du doigt 9a dans la poignée 10. Ceci est rendu possible par une longueur appropriée du bac 1, et donc un écartement défini entre les poignées 10 et 16, qui permet à la poignée 16 et au doigt 9b de coïncider.

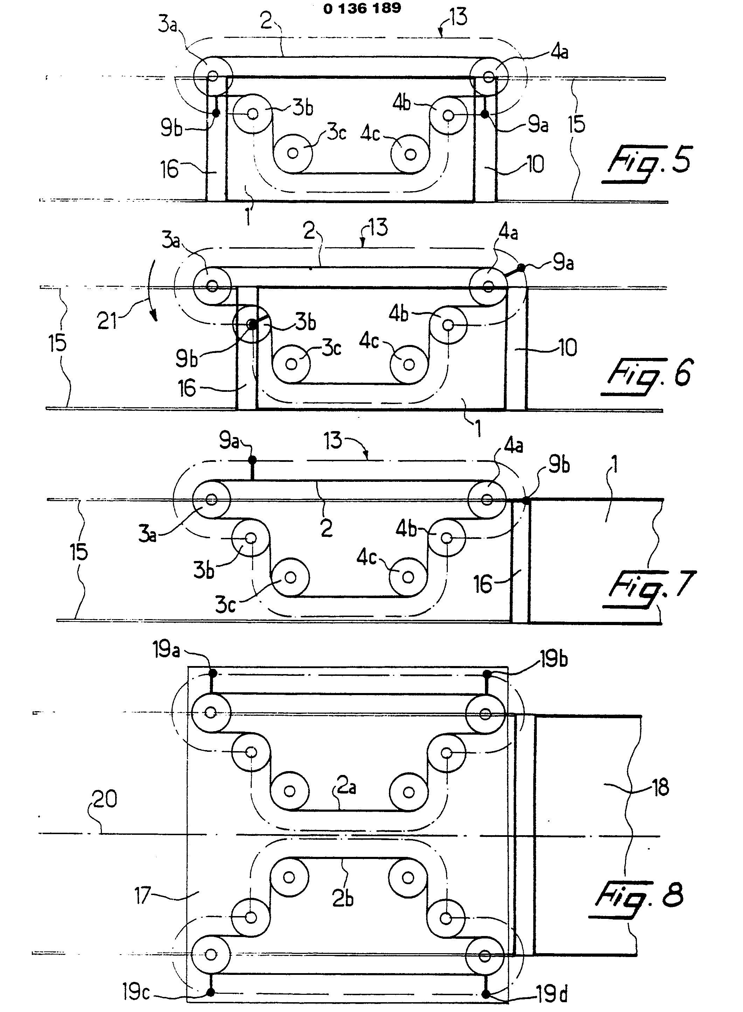

Après pénétration du doigt 9b dans la poignée 16, l'entraînement du bac a repris, cette fois-ci à l'aide de deux doigts, jusqu'à une position centrale représentée en figure 5. Dans cette position, le bac 1 est centré sur sa plate-forme support, et est fermement maintenu de chaque côté par un doigt 9a, 9b. La plateforme peut alors à son tour être manœuvrée entre les deux rayonnages en toute sécurité. A partir de sa position centrale, le bac 1 peut être rangé dans un rayonnage ou sur une table de travail, à droite ou à gauche de la plate-forme.

Supposons que l'on veuille ranger le bac 1 à droite sur le dessin. On actionne alors la chaîne 2 suivant le sens donné par la flèche 21, en figure 6. Le doigt 9b s'approche du pignon 3b et effectue au-dessus de lui une rotation sur lui-même, ne coopérant plus à l'entraînement du bac 1. Durant cette rotation, le doigt 9a se dégage tangentiellement de la poignée 10. Le doigt peut aisément effectuer ce dégagement, le doigt 9b n'entraînant plus le bac 1, lequel est donc immobile.

Le doigt 9b continue son trajet vers le pignon 3c, le contourne, rejoint le pignon 4c et le contourne. Le bac 1 est à nouveau immobilisé lors du trajet entre les pignons 4c et 4b, et durant la rotation du doigt 9b au-dessus du pignon 4b. Le doigt 9b rejoint alors le piqnon 4a, comme représenté en figure 7. Sa sortie tangentielle hors de la poignée 16 s'effectue alors aisément. Le bac 1 s'immobilise dans sa position de rangement. Les doigts 9a et 9b rejoignent alors la position qu'ils occupent en figure 1, devant les pignons 3a, 4a. Le dispositif d'entraînement se trouve à nouveau prêt pour une préhension d'un bac, à droite ou à gauche de la plate-forme.

Selon un autre mode de réalisation de l'invention, comme représenté en figure 8, deux chaînes 2a, 2b peuvent être disposées sur une même plate-forme 17 pour la manipulation des bacs 18 de grand encombrement ou de poids élevé. Ainsi, le bac est entraîné par quatre doigts 19a, 19b, 19c, 19d empêchant notamment un coincement du bac 18. Les deux chaînes 2a, 2b sont disposées de façon symétrique par rapport à l'axe d'entraînement 20 du bac 18, de façon que les axes d'alignement des quatre groupes de pignons ceux-ci étant pris deux par deux convergent vers le centre de la plate-forme. Les deux chaînes sont actionnées simultanément de façon à assurer un déplacement symétrique des doigts 19a, 19c d'une part, et des doigts 19b, 19d d'autre part, par rapport à l'axe d'entraînement 20.

**Revendications**

1. Dispositif pour la préhension de récipients et pour leur entraînement horizontal le long d'une plate-forme de manutention comportant au moins un élément flexible (2) sans fin actionné horizontalement par plusieurs pignons montés sur la plate-forme et entraînés par un moteur, ledit élément flexible (2) étant muni d'au moins deux doigts (9a, 9b) destinés à coopérer avec des logements (10) prévus sur les deux côtés frontaux (5) d'un récipient (1), l'un des doigts (9a) agissant par traction et l'autre (9b) par poussée sur ledit récipient (1), caractérisé en ce que les deux doigts (9a, 9b) occupent, transversalement à l'axe longitudinal dudit élément flexible (2), une position identique, en ce que le cheminement de l'élément flexible est défini par deux groupes de trois pignons (3a, 3b, 3c) et (4a, 4b, 4c) coopérant avec ledit élément flexible (2), les pignons de chaque groupe pris deux par deux (3a, 3b), (3b, 3c) et (4a, 4b), (4b, 4c) étant alignés suivant un axe qui n'est ni parallèle à la face frontale (5) des récipients (1), ni parallèle à la direction d'entraînement (6) desdits récipients, les axes d'alignement des pignons étant convergents vers la zone centrale de la plate-forme, et en ce que l'élément flexible (2) coopère avec les pignons intermédiaires (3b, 4b) par sa face extérieure (8) et avec les pignons les plus proches entre eux (3c, 4c) par sa face intérieure (7), de telle sorte que le brin de l'élément flexible entre chaque pignon intermédiaire (3b, 4b) et son pignon voisin (3c, 4c) soit perpendiculaire à la direction de déplacement du récipient pour que, à partir d'une première position de rangement du récipient (1) le doigt de traction (9a) n'entraîne momentanément plus le récipient de façon à permettre l'engagement du doigt de poussée (9b) à l'intérieur de l'autre logement (16) du récipient, l'entraînement du récipient (1) pouvant se poursuivre alors à l'aide des deux doigts (9a, 9b) et pour qu'en un autre endroit donné du cheminement de l'élément flexible (2), le doigt de poussée (9b) n'entraîne momentanément plus le récipient (1) de façon à permettre le dégagement du doigt de traction (9a) hors de son logement (10), le doigt de poussée (9b) entraînant alors seul le récipient (1) jusqu'à une autre position de rangement, où il se dégage à son tour de son logement (16).

2. Dispositif selon la revendication 1, caractérisé en ce que les deux doigts (9a, 9b) sont fixés sur l'élément flexible (2) au-dessus de lui en porte-à-faux du côté de sa face extérieure (8) et dirigés verticalement en direction opposée de la plate-forme support pour que durant le temps où le support des doigts (9a, 9b) est en contact avec les pignons intermédiaires (3b, 4b) et effectue autour d'eux, une rotation d'un quart de tour, les doigts se trouvent immobilisés en tournant sur eux-mêmes, au-dessus desdits pignons et n'entraînent plus le récipient.

3. Dispositif suivant les revendications 1 et 2, caractérisé en ce qu'il comprend deux éléments flexibles (2a, 2b), le déplacement des doigts (19a, 19b) de l'un des éléments flexibles (2a) étant respectivement symétrique de celui des doigts (19c, 19d) de l'autre élément flexible (2b) par rapport à l'axe d'entraînement (20) du récipient (18).

**Claims**

1. A device for retrieving containers and driving them horizontally along a handling platform, comprising at least one endless flexible member (2) actuated horizontally by several pinions mounted on the platform and driven by a motor, the said flexible member (2) being equipped with at least two 'fingers (9a, 9b) designed to interact with receiving means (10) provided on the two front sides (5) of a container (1), one of the fingers (9a) acting by pull and the other (9b) by thrust on said container (1), characterized in that the two fingers (9a, 9b) occupy, transversely to the longitudinal axis of said flexible member (2), an identical position in that the course oi the flexible member is defined by two groups each of three pinions (3a, 3b, 3c) and (4a, 4b, 4c) interacting with said flexible member (2), the pinions of each group, taken in pairs (3a, 3b), (3b, 3c) and (4a, 4b), (4b, 4c), being aligned along an axis which is neither parallel to the front faces (5) of the containers (1), nor parallel to the direction (6) in which said containers are driven, the axes of alignment of the pinions converging towards the central portion of the platform, and in that the flexible member (2) interacts with the intermediate pinions (3b, 4b) by means of its outer face (8) and with the pinions closest to each other (3c, 4c) by means of its inner face (7), in such a way that the section of the flexible member between each intermediate pinion (3b, 4b) and the pinion adjacent thereto (3c, 4c) is perpendicular to the direction of displacement of the container, so that, starting from a first storage position of the container (1) the pulling finger (9a) stops driving the container momentarily to allow engagement of the thrusting finger (9b) inside the other receiving means (16) of the container, driving of the container (1) then continuing with the aid of the two fingers (9a, 9b), and so that at another given point in the course of the flexible member (2) the thrusting finger (9b) momentarily stops driving the container (1) so as to allow disengagement of the pulling finger (9a) from its receiving means (10), the thrusting finger (9b) then driving the container (1) alone to another storage position, where it in turn disengages from its receiving means (16).

2. A device according to claim 1, characterized in that the two fingers (9a, 9b) are fixed to the flexible member (2) on its top, projecting over its outer face (8), and are directed vertically in the opposite direction from the supporting platform, so that during the period when the supports of the fingers (9a, 9b) are in contact with the intermediate pinions (3b, 4b) and are effecting a quarter turn around them, the fingers are immobilized, merely turning round on themselves on top of said pinions, and no longer drive the container.

3. A device according to claim 1 or claim 2, characterized in that it comprises two flexible members (2a, 2b), displacement of the fingers (19a, 19b) of one of the flexible members (2a) being respectively symmetrical with that of the fingers (19c, 19d) of the other flexible member (2b) in relation to the drive axis (20) of the container (18).

## Patentansprüche

1. Vorrichtung zum Greifen von Behältern und zu deren horizontalem Transport entlang einer Handhabungsplattform, bestehend aus mindestens einem flexiblen endlosen Element (2), das über mehrere auf der Plattform angebrachte und durch einen Motor angetriebene Ritzel in horizontaler Richtung bewegt wird, wobei das flexible Element (2) mit mindestens zwei Zapfen (9a, 9b) versehen ist, die mit Aufnahmen (10) an den beiden Stirnseiten (5) eines Behälters (1) zusammenwirken, wobei der eine Zapfen (9a) ziehend und der andere (9b) drückend auf den besagten Behälter (1) wirkt, dadurch gekennzeichnet, daß die beiden Zapfen (9a, 9b) in Querrichtung zur Längsachse des flexiblen Elements (2) in gleicher Stellung angeordnet sind, daß der Weg des flexiblen Elements durch zwei Gruppen von drei mit dem flexiblen Element (2) zusammenwirkenden Ritzeln (3a, 3b, 3c) und (4a, 4b, 4c) definiert wird, wobei die Ritzel jeder Gruppe jeweils paarweise (3a, 3b), (3b, 3c) und (4a, 4b), (4b, 4c) entlang einer Achse ausgerichtet sind, die weder parallel zur Stirnseite (5) der Behälter (1), noch parallel zur Bewegungsrichtung (6) der Behälter verläuft, und die Ausrichtungsachsen der Ritzel in Richtung auf den mittleren Bereich der Plattform konvergieren, und daß das flexible Element (2) mit den Zwischenritzeln (3b, 4b) über seine Außenfläche (8) und mit den Ritzeln mit dem geringsten Abstand zueinander (3c, 4c) über seine Innenfläche (7) so zusammenwirkt, daß der jeweils zwischen einem Zwischenritzel (3b, 4b) und seinem benachbarten Ritzel (3c, 4c) befindliche Teil des flexiblen Elementes senkrecht zur Bewegungsrichtung des Behälters steht, so daß der ziehende Zapfen (9a) den Behälter (1) ab einer ersten Stellung vorübergehend nicht mehr zieht, damit der drückende Zapfen (9b) in die andere Aufnahme (16) des Behälters eingreifen kann, wonach der Weitertransport des Behälters (1) mittels der beiden Zapfen (9a, 9b) erfolgen kann, und daß an einer weiteren vorgegebenen Stelle des Weges des flexiblen Elements (2) der drückende Zapfen (9b) vorrübergehend den Behälter (1) nicht mehr transportiert, damit der ziehende Zapfen (9a) mit seiner Aufnahme (10) außer Eingriff kommen kann, wonach der drückende Zapfen (9b) den Behälter (1) allein bis zu einer anderen Stellung transportiert, wo er seinerseits mit seiner Aufnahme (16) außer Eingriff kommt.

2. Vorrichtung nach Anspruch 1, dadurch gekennzeichnet, daß die beiden Zapfen (9a, 9b) oberhalb des flexiblen Elementes (2) an diesem so befestigt sind, daß sie die Außenfläche (8) des flexiblen Elements übergreifen und vertikal in eine der Tragplattform entgegengesetzte Richtung weisen, so daß die Zapfen, solange die Halterung der Zapfen (9a, 9b) mit den Zwischenritzeln (3b, 4b) in Berührung steht und um diese eine Viertelkreisbewegung vollzieht, ruhiggestellt sind und sich oberhalb der besagten Ritzel um sich selbst drehen und den Behälter nicht weitertransportieren.

3. Vorrichtung nach den Ansprüchen 1 und 2, dadurch gekennzeichnet, daß zwei flexible Elemente (2a, 2b) vorgesehen sind, wobei die Bewegung der Zapfen (19a, 19b) des einen flexiblen Elementes (2a), relativ zur Transportachse (20) des Behälters (18), jeweils symmetrisch zu den Zapfen (19c, 19d) des anderen flexiblen Elementes (2b) verläuft.

0 136 189

*Fig. 1*

*Fig. 2*

*Fig. 3*

*Fig. 4*

*Fig. 5*

*Fig. 6*

*Fig. 7*

*Fig. 8*